(19) **Europäisches Patentamt / European Patent Office / Office européen des brevets**

(11) **EP 1 805 504 B1**

(12) # FASCICULE DE BREVET EUROPEEN

(45) Date de publication et mention
de la délivrance du brevet:
**19.08.2009 Bulletin 2009/34**

(21) Numéro de dépôt: **05857328.8**

(22) Date de dépôt: **25.10.2005**

(51) Int Cl.:
***G01N 21/64*** *(2006.01)*

(86) Numéro de dépôt international:
**PCT/FR2005/050896**

(87) Numéro de publication internationale:
**WO 2006/092475 (08.09.2006 Gazette 2006/36)**

(54) **METHODE DE MESURE RELATIVE DU RENDEMENT QUANTIQUE DE FLUORESCENCE DE COLORANTS EN SOLUTION**

VERFAHREN ZUR RELATIVEN MESSUNG DER FLUORESZENZQUANTUMSEFFIZIENZ VON FARBSTOFFEN IN LÖSUNGEN

METHOD FOR THE RELATIVE MEASUREMENT OF THE FLUORESCENCE QUANTUM EFFICIENCY OF DYES IN SOLUTION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **26.10.2004 FR 0452443**

(43) Date de publication de la demande:
**11.07.2007 Bulletin 2007/28**

(73) Titulaire: **COMMISSARIAT A L'ENERGIE ATOMIQUE**
**75015 Paris (FR)**

(72) Inventeurs:
• **BLEUSE, Joël**
**F-38180 Seyssins (FR)**

• **CARAYON, Sophie**
**F-34080 Montpellier (FR)**
• **DELAMADELEINE, Eric**
**F-38950 Saint Martin Le Vinoux (FR)**

(74) Mandataire: **Poulin, Gérard**
**Brevatome**
**3, rue du Docteur Lancereaux**
**75008 Paris (FR)**

(56) Documents cités:
**WO-A-97/02482          US-A- 5 485 527**
**US-A- 5 928 954         US-B1- 6 608 918**

**Description**

## DOMAINE TECHNIQUE ET ART ANTERIEUR

L'invention concerne une nouvelle méthode de mesure relative du rendement quantique de fluorescence de colorants en solution. Elle s'applique à tout colorant organique ou inorganique, par exemple des nanocristaux de semi-conducteur.

De nombreuses applications des colorants organiques et inorganiques sont basées sur la capacité de ces colorants à émettre de la lumière, par exemple en les utilisant comme marqueur fluorescent.

Le rendement quantique de fluorescence quantifie l'efficacité de ces colorants, il est égal au rapport entre le nombre de photons émis par cette solution et le nombre de photons absorbés. Il constitue un paramètre important pour les fabricants et les utilisateurs de ces produits, et une mesure systématique et fiable de ce rendement quantique est souhaitable.

On connaît des mesures de rendement quantique de fluorescence effectuées sur des colorants organiques afin d'établir des colorants de référence, dont le rendement quantique est donc ensuite connu, ce qui permet de les utiliser comme standards; voir US-A-5928954.

Plusieurs méthodes de mesure absolue du rendement quantique de fluorescence ont ainsi été mises en oeuvre : la méthode calorimétrique, la méthode photo-acoustique, celle utilisant une sphère intégratrice et la méthode de Vavilov sont les plus connues (J. N. Demas et al., J. Phys. Chem.75, p 991-1023, (1971)).

Ces méthodes sont lourdes à mettre en oeuvre puisqu'elles requièrent beaucoup de temps, elles ne sont pas automatisables et relèvent du domaine des laboratoires de métrologie. De plus, leur fiabilité est limitée puisque la précision varie de 5 % à 10 %. Par ailleurs, ces mesures nécessitent souvent des solutions concentrées, ce qui est difficile à obtenir dans le cas de produits dont on ne dispose qu'en petites quantités, comme par exemple les nanocristaux de semi-conducteur.

Pour ces raisons la mesure du rendement quantique de fluorescence en solution se fait plus couramment de façon relative, en utilisant les standards ou colorants de référence cités plus haut. Il existe pour cela deux méthodes (J. N. Demas et al., J. Phys. Chem. 75, p 991-1007, (1971)).

L'une est dite « à forte densité optique », et nécessite des solutions très concentrées. Mais, pour la raison évoquée précédemment, cette méthode ne convient pas à la plupart des colorants inorganiques.

L'autre méthode est dite « à faible densité optique » et nécessite des solutions plus diluées. 11 s'agit pour celle-ci de comparer l'intensité de photoluminescence d'un colorant, dont le rendement quantique est connu, avec celle de l'échantillon à déterminer.

Cependant, la procédure qu'utilisent la plupart des laboratoires ou des fabricants est discutable sur deux points :

1) Tout d'abord, afin de pouvoir comparer l'intensité de photoluminescence de deux solutions, il faut que celles-ci aient la même absorbance, ce qui n'est pas toujours assuré en comparant l'échantillon et la référence à une seule concentration. Il est possible d'utiliser ce procédé en effectuant ensuite des corrections sur les mesures. Mais les facteurs correctifs ne sont pas toujours bien maîtrisés et introduisent une erreur importante sur la valeur du rendement quantique de fluorescence.

2) L'autre difficulté concerne la reproductibilité des mesures. En effet, lors d'une mesure relative, le montage couramment utilisé comporte un faisceau laser amené sur l'échantillon grâce à un système d'optiques (miroirs, filtres...), une cellule de fluorescence qui contient la solution, un système d'optiques de collection de la luminescence (lentilles, diaphragmes...) et un détecteur. Or, la photoluminescence étant isotrope, ce qui est mesuré par le détecteur ne représente qu'une partie du flux émis. Une connaissance précise de la géométrie du montage est donc primordiale car une modification, même faible, du trajet du faisceau laser ou du positionnement de la cellule peut entraîner une erreur conséquente sur la mesure et une mauvaise reproductibilité des résultats.

En conclusion, on constate que la mesure relative du rendement quantique de fluorescence telle qu'elle se pratique couramment est peu fiable, difficilement reproductible et non automatisée.

Il se pose donc le problème de trouver un nouveau procédé et un nouveau dispositif de mesure du rendement quantique relatif d'un colorant.

De préférence, un tel procédé et un tel dispositif permettent une mesure sur une large gamme de concentrations.

## EXPOSÉ DE L'INVENTION

L'invention permet à la fois d'effectuer des mesures de rendement quantique de fluorescence plus précises et de réduire considérablement le temps nécessaire à ces mesures par rapport aux méthodes décrites plus haut.

L'invention concerne un procédé de mesure du rendement quantique relatif de fluorescence d'un colorant correspondant à la revendication 1.

Selon un mode de réalisation particulier, on effectue un ajustement adéquat des données mesurées à une fonction théorique donnant l'évolution de la photoluminescence en fonction du signal transmis, et on en déduit les paramètres permettant le calcul du rendement quantique de fluorescence de l'échantillon.

Ce procédé permet de s'affranchir de l'incertitude sur la concentration du colorant, car ce résultat ne demande, à aucun moment, la connaissance, tant de la concentration du colorant à mesurer que de celle du colorant de référence.

De préférence, la concentration varie en décroissant : les mesures sont depuis la concentration la plus élevée, jusqu'aux concentrations les plus faibles.

Ce procédé peut être appliqué d'abord sur un colorant de référence (dont le rendement quantique de fluorescence est connu) puis sur l'échantillon dont on veut déterminer le rendement quantique. Ou bien, le rendement quantique du colorant de référence est déjà connu et la mesure n'est effectuée que pour le colorant dont on ignore le rendement quantique.

La solution en question est alors tout d'abord le colorant de référence, puis la même expérience, dans les mêmes conditions géométriques, est effectuée sur l'échantillon dont le rendement est à déterminer.

Une mesure de la puissance ou de l'intensité du rayonnement incident permet de normaliser les mesures et d'affranchir les mesures de toute variation d'intensité ou de puissance dans le faisceau ou le rayonnement incident.

Selon un mode particulier de réalisation de l'invention, on peut donc mesurer simultanément la puissance du faisceau incident, la puissance transmise à travers la cellule, et le signal de fluorescence émis par la solution.

Le faisceau ou le rayonnement incident peut être celui d'un laser, ou bien celui d'une source non cohérente, par exemple le faisceau collimaté d'une source de type triode émettrice de lumière, ou d'une lampe blanche spectralement filtrée ou toute autre source susceptible d'exciter la fluorescence des colorants mesurés et dont le spectre ne recouvre pas le spectre d'émission de ces colorants.

Une mesure supplémentaire du faisceau réfléchi par la cellule contenant le colorant permet de contrôler l'homogénéité de la solution dans la cellule.

Le procédé selon l'invention est particulièrement bien adapté à la mesure du rendement quantique de fluorescence de colorants inorganiques, par exemple des nanocristaux de semi-conducteur, par exemple de type II - VI, par exemple encore de CdSe(ZnS). Dans le cas des semi-conducteurs, l'invention est d'autant plus intéressante que la concentration de nanocristaux, dont la masse est très variable, est très difficile à évaluer ; or l'invention ne nécessite pas la connaissance de cette concentration.

Les moyens de détection de la fluorescence et du rayonnement transmis, ainsi que la cellule et au moins une partie des moyens permettant de définir le trajet du rayonnement incident sont avantageusement fixes entre eux et/ou sont fixés sur une table.

La cellule de fluorescence est de préférence à circulation, ce qui permet de faire varier la concentration de la solution dans la cellule sans la déplacer.

En outre la cellule dispose de préférence de moyens pour introduire un colorant et un solvant sans introduire de bulles d'air dans la cellule.

L'invention concerne également un dispositif pour la mesure du rendement quantique relatif de fluorescence d'un colorant en solution dans un solvant correspondant à la revendication 20.

Des moyens peuvent être prévus pour faire varier la concentration d'un colorant dans la cellule en fonction du temps.

La cellule peut être une cellule de fluorescence à circulation.

Par ailleurs, le dispositif peut en outre comporter des moyens pour mesurer un signal réfléchi par la cellule.

Des moyens pour homogénéiser le colorant dans la cellule permettent d'effectuer des mesures dans une solution homogène.

Des moyens peuvent être prévus pour mesurer des variations de l'intensité ou de la puissance d'un rayonnement incident sur la cellule.

Selon un mode de réalisation, les moyens de calcul effectuent l'ajustement à une formule théorique des données de signal de fluorescence et de signal transmis.

Tant pour le dispositif que pour le procédé selon l'invention, la formule théorique peut être la suivante :

$$F = \frac{B}{\sqrt{A}} \frac{\hbar\omega_f}{\hbar\omega_i} \rho \sqrt{T} \sinh\left(\frac{\Delta}{L}\ln\left(\frac{A}{T}\right)\right) \qquad (5)$$

ou encore la formule suivants :

$$F = -\frac{B}{A}\frac{\hbar\omega_f}{\hbar\omega_i}\rho\frac{\Delta}{L}(T-A)+C(T-A)^3 \qquad (6)$$

dans lesquelles F est proportionnelle à la puissance du signal de fluorescence, T est proportionnelle à la puissance du signal transmis, $\rho$ est le rendement quantique absolu de fluorescence, $\hbar\omega_f$ est l'énergie des photons émis par la solution, $\hbar\omega_i$ est l'énergie des photons incidents, B et A sont des constantes et $\Delta$ et L des paramètres géométriques de la cellule qui contient le colorant.

De préférence, les moyens de calcul calculent le rendement quantique relatif du colorant par la formule :

$$\rho_E = \rho_R\frac{(\hbar\omega_f)_R\,(m1)_E\,(m2)_E}{(\hbar\omega_f)_E\,(m1)_R\,(m2)_R} \qquad (9)$$

dans laquelle $\hbar\omega_f$ est l'énergie des photons émis par la solution, $\hbar\omega_i$ est l'énergie des photons incidents, m1 et m2 sont des paramètres caractéristiques de l'évolution de la fluorescence (F) en fonction du signal transmis (T), les indices R et E étant relatifs respectivement au colorant de référence et à l'échantillon.

De préférence encore, la cellule et les moyens de mesure sont disposés de manière fixe les uns par rapport aux autres.

Des moyens peuvent être prévus pour définir une direction d'incidence d'un rayonnement.

L'injection d'une solution de colorant, puis du solvant destiné à la diluer, dans la cellule, peut être réalisée grâce à des moyens d'injection automatique.

## BRÈVE DESCRIPTION DES FIGURES

- La figure 1 est un schéma général d'un dispositif selon l'invention.
- La figure 2 est un schéma d'un montage optique utilisé dans un mode de réalisation d'un dispositif selon l'invention.
- Les figures 3A et 3B sont des schémas d'une cellule de fluorescence vue du côté et d'une coupe de la cellule de fluorescence vue du haut ;
- La figure 4 est un graphe de R=f(T) pour le sulfate de quinine.
- La figure 5 est un graphe de F=f(T) pour la rhodamine et le sulfate de quinine.
- La figure 6 est un graphe de F=f(T) pour la rhodamine et les nanocristaux de CdSe(ZnS).
- La figure 7 représente des moyens de traitement de données pouvant être mis en oeuvre dans le cadre de l'invention.

## EXPOSÉ DÉTAILLÉ D'UN MODE DE RÉALISATION DE L'INVENTION

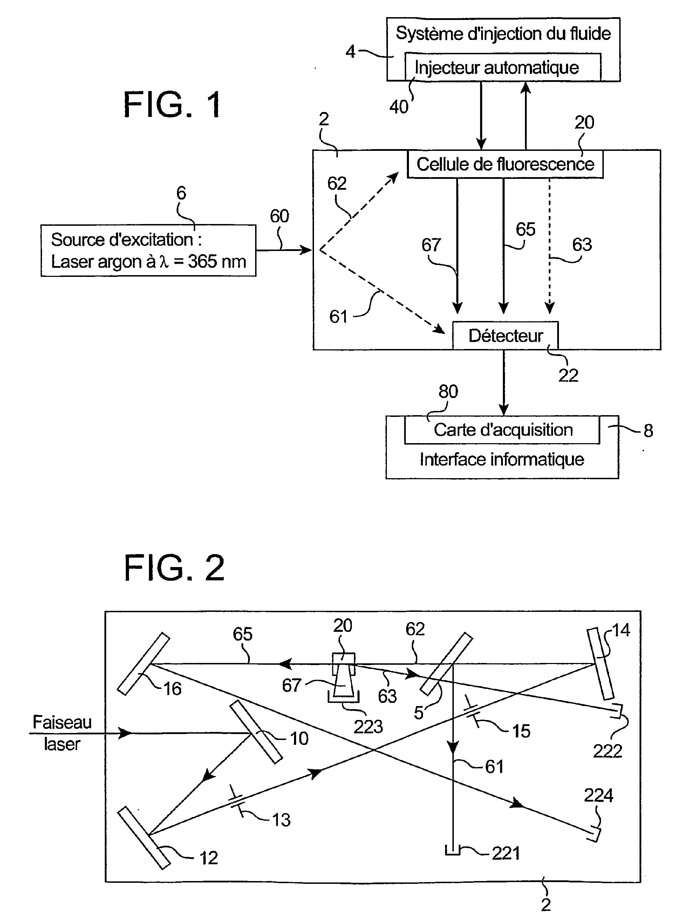

La figure 1 représente schématiquement. divers composants d'un dispositif pouvant être mis en oeuvre dans le cadre de l'invention.

Un tel dispositif comporte une source de rayonnement 6, ou des moyens 6 produisant un rayonnement d'excitation, des moyens optiques 2, comportant eux même une cellule de fluorescence 20 et au moins des moyens 22 de détection, d'une part des signaux optiques de fluorescence et d'autre part du signal qui traverse la cellule 20. La référence 22 désigne donc schématiquement sur la figure 1 un groupe de détecteurs plutôt qu'un seul détecteur.

Des moyens fluidiques 4 permettent d'injecter dans la cellule 20 un colorant et un solvant. De préférence ces moyens comportent par exemple, comme illustré sur la figure 1, des moyens 40 d'injection automatique.

Des moyens 8 d'acquisition et de traitement des données permettent de prélever et de traiter les données fournies par le ou les détecteurs.

La source 6 d'excitation est une source de rayonnement continu dans le temps, par exemple un laser argon à la longueur d'onde 365 nm.

Le faisceau ou le rayonnement incident peut être celui d'un laser, ou bien celui d'une source non cohérente, par exemple le faisceau collimaté d'une source de type triode émettrice de lumière, ou d'une lampe blanche spectralement filtrée ou toute autre source susceptible d'exciter la fluorescence des colorants mesurés et dont le spectre ne recouvre pas le spectre d'émission de ces colorants.

La puissance de la source de rayonnement est choisie de préférence assez faible pour ne pas photo-blanchir (destruction par photo-oxydation) les particules fluorescentes du colorant, ce qui fausserait la mesure.

Par exemple, cette puissance est comprise entre 1 µW ou 10 µW et 100 µW ou 200 µW.

Une partie 62 du rayonnement 60 émis par les moyens 6 est dirigée vers la cellule 20. Une autre partie 61 de ce même rayonnement peut être utilisée pour une mesure des variations d'intensité du rayonnement 60 lui-même, auquel cas les moyens détecteurs 22 comportent, outre les moyens déjà mentionnés ci-dessus, des moyens de détection de cette partie 61 du rayonnement.

Les moyens fluidiques 4 (par exemple moyens 40 d'injection automatique et valve, telle qu'une valve à au moins deux canaux, par exemple une valve à six canaux du type utilisé en chromatographie liquide à basse pression) sont liés, en cours de fonctionnement, à la cellule 20 de fluorescence dans laquelle ils injectent colorant et solvant.

De la cellule 20 est émis un rayonnement 67 de fluorescence qui est détecté et mesuré par les moyens 22, plus précisément par les moyens de détection de rayonnement de fluorescence, ainsi qu'un rayonnement 65 qui traverse la cellule sans être absorbé par le colorant et qui est lui aussi détecté et mesuré par les moyens 22, plus précisément par les moyens de détection de rayonnement en transmission.

Selon un mode de réalisation, un rayonnement 63 réfléchi par la cellule peut également être détecté par les moyens détecteurs 22, par un détecteur spécifique. On expliquera plus loin l'utilité de cette mesure.

Les moyens 8 de la figure 1 peuvent comporter une ou plusieurs cartes 80 d'interface informatique pour l'acquisition des données. Ces cartes vont permettre d'acquérir et de traiter les données issues des moyens détecteurs 22, par couplage par exemple à des moyens de traitement de données tels qu'un microordinateur type PC.

Ces moyens de traitement de données peuvent être spécialement programmés à cet effet et pour mettre en oeuvre un traitement de données selon l'invention, tel qu'expliqué plus loin.

La figure 2 représente un exemple de réalisation des moyens optiques 2.

Sur cette figure, le tracé du faisceau incident émis par les moyens 6 (non représentés sur cette figure) est représenté en trait plein et la direction de référence est définie par les deux diaphragmes 13 et 15.

Le dispositif comporte quatre miroirs 10, 12, 14, 16.

Deux détecteurs 223 et 224 (par exemple des photodiodes) permettent de mesurer respectivement l'intensité ou la puissance, d'une part de la photoluminescence 67 du colorant contenu dans la cellule 20 et d'autre part du faisceau 65 transmis à travers cette cellule, après traversée du colorant.

Un filtre passe-haut (par exemple avec une longueur d'onde de coupure à 400 nm pour un faisceau incident à 365 nm) peut être associé au détecteur 223, par exemple intégré dans un support de ce détecteur, afin de couper une éventuelle diffusion du signal d'excitation (ici à $\lambda$=365 nm) par des impuretés.

Le détecteur 223 est de préférence placé au plus près de la cellule 20 pour collecter le maximum de signal. Des moyens optiques de collection de la fluorescence vers les détecteurs peuvent y être ajoutés (lentille, et/ou miroirs, et/ou sphère intégratrice). Au contraire, le détecteur 224 est de préférence placé le plus loin possible de la cellule 20 pour diminuer au maximum le rapport du signal de fluorescence sur le signal d'excitation (la fluorescence est une émission dans tout l'angle solide disponible, son intensité diminue comme l'inverse du carré de la distance, à la différence du faisceau laser).

Une lame de verre 5 peut être placée avant la cellule 20, pour prélever une petite partie 61 du faisceau signal incident pour l'envoyer sur le détecteur 221 (Figure 2). Ce signal sert de référence. Il permet de mesurer ou de contrôler, à l'aide d'un détecteur 221 (par exemple une photodiode), les variations d'intensité ou de puissance du faisceau incident.

Cette mesure pourrait aussi bien être réalisée à l'extérieur du système représenté sur la figure 2, par exemple à proximité de la source 6 de rayonnement (non représentée sur cette figure 2).

Un quatrième détecteur 222 (par exemple là encore une photodiode) permet de mesurer ou de contrôler l'intensité ou la puissance du signal 63 réfléchi par les fenêtres d'entrée et de sortie de la cellule 20.

Ce détecteur 222 se trouve de préférence le plus près possible du miroir 14 pour que le faisceau réfléchi 63 (et donc également le faisceau incident 62) fasse un angle faible avec la normale à la cellule (environ 3,5°). Un faisceau en incidence quasi-normale permet de récupérer le maximum de signal sur le détecteur 222, et de simplifier les calculs des coefficients de réflexion et de transmission sur la cellule.

Les deux diaphragmes 13, 15, sont de préférence fixés définitivement, et définissent une direction de référence.

Les deux premiers miroirs 10, 12 sont ajustables et servent à aligner le faisceau sur cette direction de référence.

En aval, les miroirs 14, 16, les supports des détecteurs 223, 224, ainsi que la cellule 20 peuvent être scellés après que leur position a été optimisée.

La fixation ou le scellement des éléments situés en aval des miroirs 10, 12, permet de définir une configuration fixe de mesure.

Lors d'une utilisation du dispositif, on cherche de préférence à fixer les paramètres géométriques du montage (miroirs, diaphragmes) pour que le trajet du faisceau 62 à travers la cellule et vers les détecteurs soit toujours le même.

De préférence, les moyens de détection 223, 224 de la fluorescence et du rayonnement transmis, ainsi que la cellule 20 et au moins une partie des moyens 13, 14, 15, 16 permettant de définir le trajet du rayonnement incident 62 sont fixes entre eux.

Ceci permet de travailler dans une configuration et une géométrie stables.

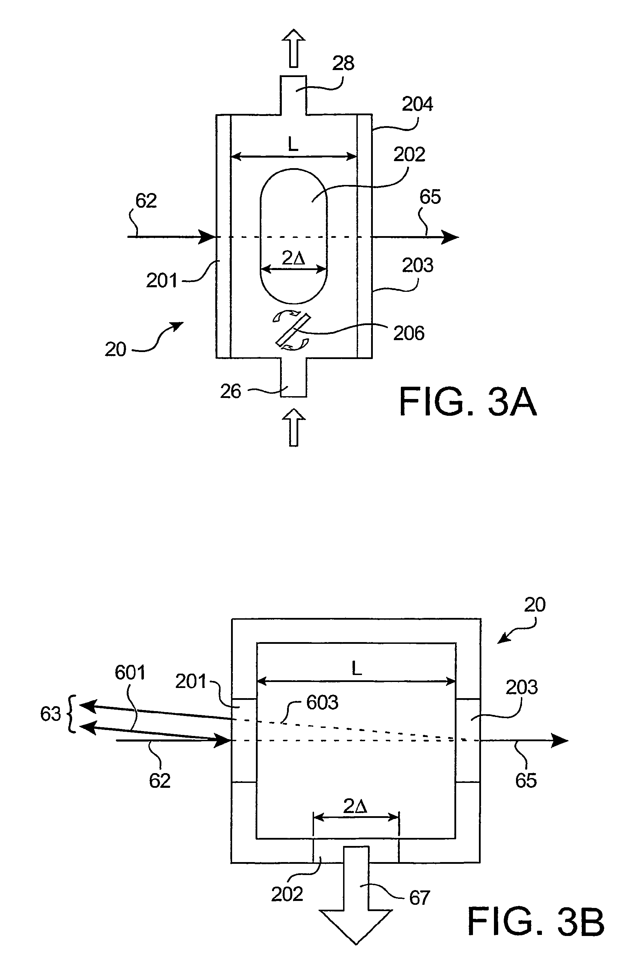

Un exemple de cellule 20 pouvant être utilisée dans le cadre d'un dispositif selon l'invention est représenté en figures 3A et 3B.

Cette cellule a par exemple un volume compris entre 0,1 ml et 10 ml.

De largeur L (il s'agit en fait de la longueur du trajet du faisceau lorsqu'il traverse toute la cellule), elle comporte des parois 201, 203, par exemple en quartz, pour laisser entrer et sortir un rayonnement d'excitation 62 (de puissance Pi) et en transmission 65 (de puissance Pt).

Latéralement, une fenêtre 202, par exemple de forme oblongue, également en quartz, de largeur 2Δ, permet de laisser sortir un rayonnement 67 de fluorescence (de puissance Pf).

Le signal de fluorescence est donc mesuré par cette fenêtre 202 oblongue.

Sur la figure 3B, les parois de quartz sont représentées en gris lorsqu'elles sont opaques et en blanc dans leurs parties transparentes.

Le faisceau 63 (de puissance Pr) réfléchi par la cellule 20 comporte en fait deux composantes 601, 603 réfléchies d'une part par la fenêtre d'entrée 201 et d'autre part par la fenêtre de sortie 203.

La mesure du signal 63 réfléchi sur la cellule 20 permet de vérifier l'homogénéité de la solution dans cette cellule.

Des moyens 26, 28 permettent d'introduire un fluide dans la cellule et de l'en extraire, éventuellement à l'aide de moyens de pompage.

La cellule 20 est de préférence à circulation, ce qui permet de faire varier la concentration de la solution dans la cellule sans déplacer cette dernière, ce qui contribue également à la stabilité géométrique de l'ensemble.

Avec une telle cellule, on peut par exemple partir d'une solution concentrée et injecter en continu le solvant pour la diluer, tout en effectuant les mesures.

De plus, en injectant le solvant avec des moyens automatiques d'injection, par exemple à des vitesses de 100 μL/min à 200 μL/min, on peut obtenir en 10 minutes plusieurs milliers de points, ce qui accroît considérablement la précision, tout en gardant un temps d'expérience très inférieur à celui mis en oeuvre dans le cas des techniques connues qui nécessitent quelques heures pour des mesures de même précision.

Afin de conserver une solution homogène dans la cellule, on peut utiliser des moyens 206 d'homogénéisation, par exemple un barreau aimanté (de petites dimensions : par exemple L=2mm, ø=1mm) introduit dans la cellule et mis en mouvement à l'aide d'un agitateur magnétique, comportant par exemple deux aimants entraînés en rotation par un moteur (non représentés sur la figure).

Les signaux issus des détecteurs sont envoyés vers des moyens électroniques d'acquisition et des moyens de traitement de ces signaux.

Selon un exemple de traitement, ces signaux détectés par les photodiodes sont convertis, amplifiés et filtrés par plusieurs circuits, chaque circuit étant situé derrière chacun des détecteurs.

Ces signaux sont envoyés sur un ordinateur par l'intermédiaire d'une carte d'acquisition (Keithley) et traités par un programme.

Les mesures faites par les différents détecteurs le sont de manière quasi-simultanée, de préférence avec une cadence d'acquisition rapide, par exemple comprise entre une acquisition (en fait : des acquisitions simultanées) toutes les 5 ms ou toutes les 10 ms et une toutes les 100 ms ou toutes les 200 ou 300 ms. Selon encore un exemple, une acquisition est effectuée toutes les 50 ms par exemple.

D'une manière générale les détecteurs utilisés sont de préférence tous des photodiodes au silicium.

Des exemples de traitement des signaux vont être exposés dans la suite.

Le montage peut être conçu pour qu'il soit compact afin de pouvoir le transporter facilement.

A cette fin, les moyens optiques et les moyens de détection peuvent être fixés sur une plaque, par exemple en aluminium, par exemple de dimensions 25 cm x 15 cm x 1 cm. Cette plaque repose sur trois pieds de hauteur réglable qui se fixent facilement sur la table de manipulation.

Un exemple de montage complet comprend :

- 1 laser 6 à argon,
- 1 plaque montée sur 3 pieds,
- 4 miroirs 10, 12, 14, 16 interférentiels, pour l'ultraviolet, chacun de diamètre 12,7 mm, et leurs supports, fixés sur la plaque,
- 2 diaphragmes 13, 15, de diamètre 0,8 mm,
- 1 lame séparatrice 5 et son support,
- 1 cellule 20 de fluorescence à circulation (volume=100 μL),
- 1 agitateur magnétique et un barreau aimanté 206 dans la cellule,
- 1 filtre passe-haut à longueur d'onde de coupure 400 nm, en sortie de cellule, du côté de la fenêtre d'observation de la fluorescence émise,

- 4 détecteurs 221, 222, 223, 224 (des photodiodes) et leurs supports,
- 4 circuits imprimés (un pour chaque détecteur), un convertisseur courant/tension et un amplificateur,
- 1 carte d'acquisition,
- 1 circuit imprimé assurant la liaison vers la carte d'acquisition,
- 1 injecteur automatique,
- 1 vanne six canaux et des seringues reliées à la valve.

L'obtention du rendement quantique de fluorescence à partir des grandeurs mesurées lors de l'expérience peut découler de la mise en oeuvre de diverses méthodes d'exploitation des données expérimentales, mais qui ne présentent pas toutes la même précision.

Certaines méthodes d'exploitation donnent de bons résultats lorsque la concentration de la solution est intermédiaire, mais l'erreur relative sur le calcul du rendement quantique diverge aux faibles et fortes concentrations.

De préférence, on utilise la méthode qui donne la meilleure précision sur le rendement quantique de fluorescence, et qui comporte le traçage du signal de luminescence en fonction du signal transmis, donc en fonction de la concentration, et un ajustement de la courbe obtenue par une formule théorique.

L'erreur relative sur le rendement quantique est ainsi moyennée sur la totalité des points de mesure.

Les expressions théoriques des différentes grandeurs mesurées dépendent de la géométrie de la cellule de fluorescence.

L'expression théorique du signal transmis (Pt) est :

$$Pt = APi\exp(-2X), en\ posant\ X = \alpha\frac{L}{2} \qquad (1)$$

Avec A une constante, $\alpha$ l'absorbance de la solution étudiée et L la largeur de la cellule de fluorescence.

L'expression théorique du signal de fluorescence ($Pf$) est :

$$Pf = B\frac{\hbar\omega_f}{\hbar\omega_i}\rho Pi\exp(-X)\sinh\left(\frac{2\Delta}{L}X\right)en\ posant\ X = \alpha\frac{L}{2} \qquad (2)$$

Avec B une constante, $\hbar\omega f$ l'énergie des photons émis par la solution, $\hbar\omega i$ l'énergie des photons incidents (provenant du laser), $\rho$ le rendement quantique de fluorescence et $\Delta$ un paramètre géométrique de la cellule de fluorescence (Figure 3A).

Une normalisation peut être effectuée en divisant les expressions trouvées par la puissance du signal incident ($Pi$), ce qui donne, en posant $T=Pt/Pi$ et $F=Pf/Pi$ :

$$T = A\exp(-2X)\ d'après\ l'équation\ (1) \qquad (3)$$

$$F = B\frac{\hbar\omega_f}{\hbar\omega_i}\rho\exp(-X)\sinh\left(\frac{2\Delta}{L}X\right) \qquad d'après\ l'équation\ (2) \qquad (4)$$

D'après les équations (3) et (4), l'expression théorique de la courbe F=f(T) est :

$$F = \frac{B}{\sqrt{A}} \frac{\hbar\omega_f}{\hbar\omega_i} \rho \sqrt{T} \sinh\left(\frac{\Delta}{L} \ln\left(\frac{A}{T}\right)\right) \qquad (5)$$

Il est possible d'effectuer l'ajustement des points mesurés par rapport à cette expression complète. Cependant, lorsqu'on ne dispose pas de beaucoup de matière, seule les mesures aux faibles concentrations sont obtenues. Il est alors plus simple, dans ce cas, de faire l'ajustement des mesures expérimentales par rapport à une expression qui approche la formule (5), par exemple en effectuant un développement en série limité de l'équation (5) autour de $T=A$.

L'expression approximative utilisée est par exemple la suivante :

$$F = -\frac{B}{A} \frac{\hbar\omega_f}{\hbar\omega_i} \rho \frac{\Delta}{L} (T - A) + C(T - A)^3 \qquad (6)$$

Avec $C$ un paramètre dont l'expression est connue, mais dont la valeur n'est pas nécessaire au calcul du rendement quantique.

L'ajustement de la courbe F=f(T) peut donc s'effectuer par rapport à trois paramètres :

$$m1 = -\frac{B}{A} \frac{\hbar\omega_f}{\hbar\omega_i} \rho \frac{\Delta}{L} \quad m2 = A \quad \text{et} \quad m3 = C . \qquad (7)$$

Les données expérimentales présentent en fait une légère courbure, prévue par l'équation (6) Pour obtenir une valeur correcte de m1, l'ajustement tient compte du terme proportionnel à $(T-A)^3$, bien que m3 ne soit pas utilisé ultérieurement.

Cette procédure peut être d'abord appliquée au colorant de référence : $(m1)_R$, $(m2)_R$ et $(m3)_R$ sont alors obtenus. Selon une variante, ces paramètres sont connus d'une mesure antérieure effectuée pour ce même colorant de référence.

Cette procédure est appliquée à l'échantillon, ce qui donne $(m1)_E$, $(m2)_E$ et $(m3)_E$.

Le rendement quantique relatif $\rho_E$ de l'échantillon s'obtient en faisant le rapport de $(m1)_E/(m1)_R$ :

$$\frac{(m1)_E}{(m1)_R} = \frac{-\dfrac{B}{A_E} \dfrac{(\hbar\omega_f)_E}{\hbar\omega_i} \rho_E \dfrac{\Delta}{L}}{-\dfrac{B}{A_R} \dfrac{(\hbar\omega_f)_R}{\hbar\omega_i} \rho_R \dfrac{\Delta}{L}} \qquad d'après\ l'équation\ (7) \qquad (8)$$

En simplifiant l'équation (8) par les constantes B, L et $\Delta$, et en remplaçant le paramètre $A$ par $m2$ trouvé grâce à l'ajustement effectué plus haut, on trouve :

$$\rho_E = \rho_R \frac{(\hbar\omega_f)_R (m1)_E (m2)_E}{(\hbar\omega_f)_E (m1)_R (m2)_R} \qquad (9)$$

Le rapport des énergies de fluorescence $\hbar\omega_f$ peut intervenir car la référence et l'échantillon n'émettent pas nécessairement exactement à la même longueur d'onde.

De ce fait, on peut faire intervenir en plus un autre facteur correctif, car l'efficacité du détecteur de fluorescence peut varier avec la longueur d'onde.

D'autres corrections sont possibles, en particulier celle liée à la différence d'indice des solvants utilisés pour le colorant de référence et le colorant à mesurer.

Une mesure de la puissance réfléchie (Pr) par la face avant 201 et la face arrière 203 de la cellule (Figure 3B), à l'aide du détecteur 222 (figure 2), permet de vérifier l'homogénéité de la solution dans la cellule.

En effet, comme expliqué ci-dessus en liaison avec la figure 3B, Pr est la somme de deux composantes :

(1) une composante 601 réfléchie par la face avant 201 de la cellule, c'est-à-dire proportionnelle à Pi, donc indépendante de la concentration de la solution,

(2) une deuxième composante 603 réfléchie par la face arrière 203 de la cellule 20, et qui dépend donc de la solution qu'elle traverse deux fois.

L'expression théorique de la puissance réfléchie est :

$$Pr = r\,Pi + r'\,Pt^2 \tag{10}$$

Avec r et r' des constantes. La normalisation s'effectue comme précédemment en divisant par Pi, ce qui donne, en posant R=Pr/Pi :

$$R = r + r'\,T^2 \tag{11}$$

Ce calcul est valable si la solution dans la cellule est homogène car, sinon, des phénomènes complexes interviennent et cette expression théorique n'est pas vérifiée. L'ajustement du tracé de R=f(T) par rapport à une parabole permet de vérifier l'homogénéité de la solution.

Les moyens 8 de traitement des données permettent de traiter les données mesurées par les détecteurs selon un procédé tel que décrit ci-dessus.

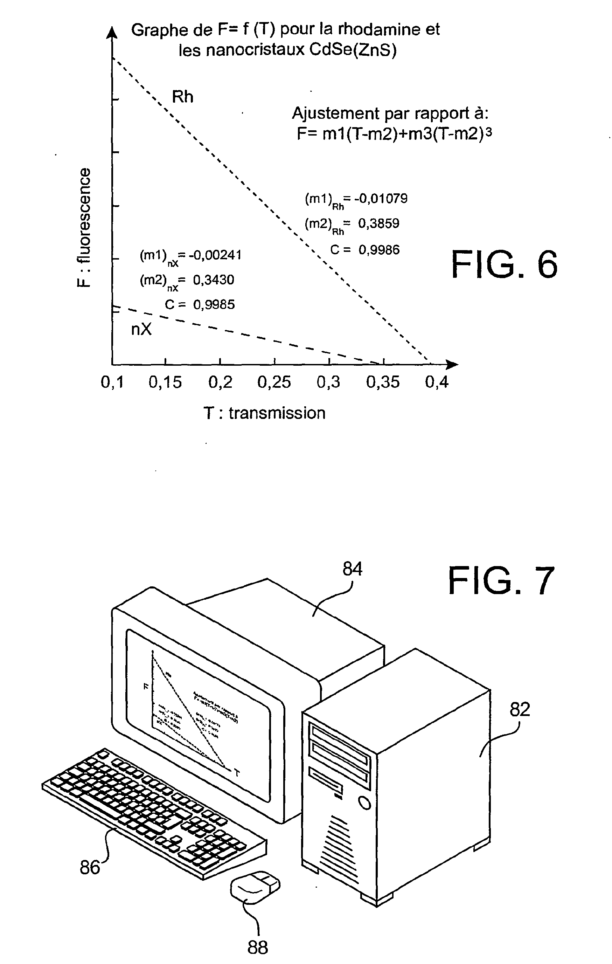

De tels moyens sont représentés sur la figure 7 et comportent, outre un micro-ordinateur 82 recevant des données des cartes d'acquisition associées aux détecteurs, et programmé pour mettre en oeuvre un procédé selon l'invention, tel que décrit ci-dessus, des moyens 84 de visualisation qui permettent à un opérateur de visualiser, par exemple :

- la répartition des points mesurés F et T ainsi que la courbe F = f(T),
- les paramètres correspondant m1, m2 et éventuellement C calculés, ainsi que le rendement de fluorescence relatif obtenu,
- éventuellement les points et la courbe R = f(T).

D'autres paramètres tels que des caractéristiques du faisceau incident peuvent également être affichés.

Des moyens périphériques 86, 88 peuvent permettre à un opérateur de contrôler l'ensemble de la mesure, par exemple le déclenchement de la source de rayonnement, la durée de la mesure, le nombre de points d'acquisition... etc.

De tels moyens, associés avec un ensemble tel que celui de la figure 2, monté sur une table de manipulation peuvent être intégrés à une unité de fabrication de colorant, ou bien dans un laboratoire dans lequel de tels colorants sont couramment utilisés et doivent être caractérisés du point de vue de leur rendement quantique.

Les principaux avantages de l'invention sont les suivants :

a) la précision importante de la mesure du rendement quantique en relatif, grâce à l'obtention des grandeurs F et T, et éventuellement R et I ; par ailleurs, un grand nombre de points peuvent être mesurés en un temps assez court. En pratique, des points en nombre au moins égal à 1000 ou à 5000, ou en nombre compris entre 1000 et 5000, peuvent être mesurés, par exemple en une durée d'environ 10 minutes ou comprise entre 5 mn et 20 mn, ce qui suffit à assurer la pleine précision de la méthode. L'invention permet aussi une exploitation adéquate des résultats. La précision avancée est meilleure que 3 %, sans tenir compte de l'imprécision déjà existante sur la valeur du rendement quantique de fluorescence du colorant de référence (méthode de mesure en absolu).

b) la reproductibilité des mesures dans le temps, qui garantit une comparaison fiable entre la référence et l'échantillon grâce au montage dédié, dont les paramètres géométriques peuvent être fixés rigoureusement. Il est ainsi possible d'étudier le vieillissement, au cours du temps, du rendement quantique de fluorescence d'une solution avec une bonne précision.

c) la rapidité de la mesure et de la méthode d'exploitation des résultats. Les mesures faites par les différents détecteurs peuvent être simultanées ou quasi-simultanées. De plus l'automatisation du montage à l'aide d'un injecteur automatique et de moyens d'acquisition de données permet une cadence de mesure élevée et réduit considérablement le temps de l'expérience, à 10 à 15 minutes environ pour la mesure de chaque produit, référence puis colorant, soit au total environ 30 minutes pour l'obtention du rendement quantique du colorant par l'expression (9).

d) bien qu'étant utilisable dans toute la gamme possible de concentration du colorant à mesurer, l'invention ne nécessite pas de mesures à fortes concentrations ; elle permet en outre de s'affranchir de toute connaissance précise de la concentration du colorant, puisque seuls les rayonnements de fluorescence et transmis sont utilisés.

Des mesures de rendement quantique de fluorescence ont été faites par rapport à la rhodamine 6G dans l'éthanol, dont le rendement quantique a été mesuré en absolu par plusieurs méthodes.

La méthode calorimétrique, qui semble avoir la meilleure précision, annonce un rendement de 94 % à 5 % près (A. V. Butenin et al., Opt. Spectrosc. 47(5), p. 568-569, nov. (1979)).

Une mesure 'test' a d'abord été effectuée sur un colorant organique dont le rendement est déjà connu dans la littérature afin de valider la méthode.

Puis, le rendement quantique de fluorescence de particules inorganiques (des nanocristaux de semi-conducteur) est mesuré.

<u>Exemple 1</u> : Mesure relative du rendement quantique de fluorescence d'un colorant organique : le sulfate de quinine.

Le sulfate de quinine fait partie, comme la rhodamine 6G, des colorants les plus étudiés, donc de ceux dont le rendement quantique est le mieux connu. Des mesures calorimétriques ont montré que le rendement de la quinine dans 0,1 N d'acide sulfurique était de 56 % à 7 % près (B. Gelernt et al., J. Chem. Soc., Faraday Trans. 2, 70, p 939-940, (1974)).

Après quelques réglages optiques pour aligner le faisceau laser sur la direction de référence donnée par les deux diaphragmes (Figure 2), la mesure sur le colorant de référence, ici la rhodamine, peut commencer.

On injecte, dans la cellule de fluorescence, 1mL d'une solution de rhodamine de concentration C=1 mg/mL dans l'éthanol. Idéalement, on choisit la concentration de la solution pour qu'au début de l'expérience la transmission soit nulle (toute la lumière du faisceau laser est absorbée), puis rapidement non nulle (c'est-à-dire pas trop concentrée) pour limiter le temps d'acquisition.

Il est possible d'utiliser des solutions beaucoup moins concentrées lorsque, par exemple, la quantité de matière disponible est faible.

Puis, on injecte l'éthanol par un autre canal de la valve 'six canaux', afin de ne pas laisser rentrer d'air dans le système.

Cette injection est automatisée et se fait par un pousse-seringue automatique à une vitesse de 100 $\mu$L/min à 200 $\mu$L/min.

La vitesse est optimisée afin de diluer lentement la solution pour obtenir assez de points de mesure, mais pas trop afin que l'acquisition ne dépasse pas 10 à 15 min.

La mesure se termine automatiquement quand le signal de fluorescence tombe aux alentours de zéro, c'est-à-dire qu'il n'y a pratiquement plus de rhodamine, dans la cellule.

Si on le désire, il est possible de récupérer la solution après usage. Ce n'est pas recommandé en ce qui concerne la rhodamine car il s'agit de la référence, il est donc préférable d'utiliser une solution fraîche à chaque fois.

En revanche, cela peut être utile pour les colorants dont on ne dispose que d'une faible quantité. Notons ici que la puissance du faisceau laser est très faible, P=1 $\mu$W à l'entrée du système optique, soit environ deux fois moins sur la cellule du fait des pertes au niveau des miroirs, des diaphragmes....

Cette puissance est choisie assez faible pour ne pas photo-blanchir (destruction par photo-oxydation) les particules fluorescentes, ce qui fausserait la mesure.

On effectue la même procédure pour la quinine dans 0,1 N d'acide sulfurique. La concentration de la solution de départ est C=4,5 mg/mL.

Une fois l'acquisition terminée, il est procédé à l'exploitation des mesures.

On normalise, pour la référence et l'échantillon, le signal transmis, le signal réfléchi et le signal de fluorescence par le signal incident.

On trace ensuite $R=f(T)$ et $F=f(T)$ pour les deux colorants.

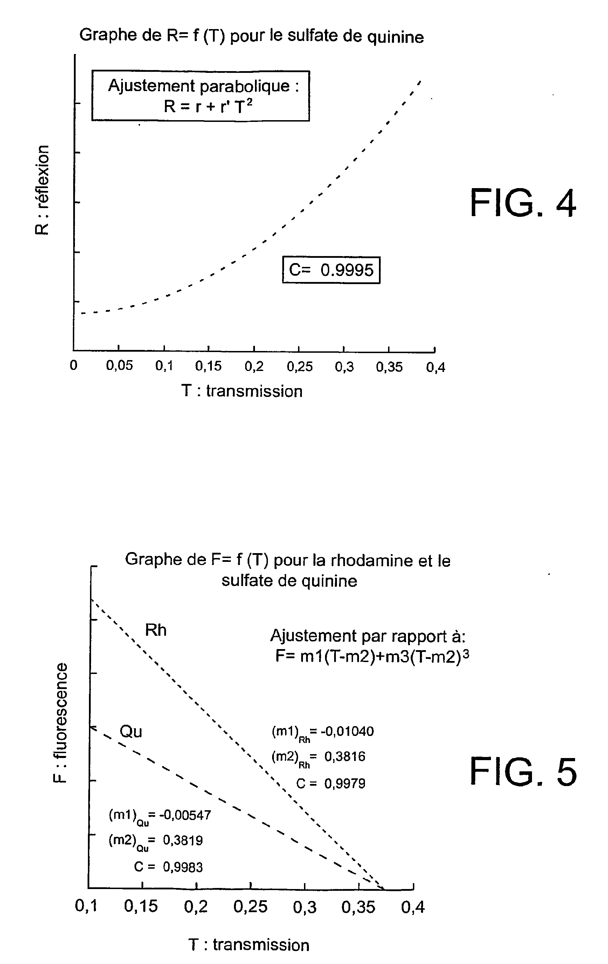

Sur le graphe R = f(T) de la figure 4, les points expérimentaux sont représentés, ainsi que l'ajustement (tracé en pointillé) par la formule théorique n°11.

Cet ajustement de la courbe R = f (T) par une parabole est de très bonne qualité : le coefficient de corrélation, noté C, de l'ajustement par rapport à la courbe est très proche de 1. Ceci permet de vérifier que la solution était homogène lors de l'acquisition pour le sulfate de quinine .(figure 4). Cette même vérification est faite pour la rhodamine (données non figurées).

L'ajustement des courbes F=f(T) s'effectue par la formule théorique n°6, après avoir écarté les points représentant les fortes concentrations, puisque cette expression approchée n'est valide que pour les faibles concentrations, au voisinage de F = 0.

On écarte de l'ajustement les points représentant les fortes concentrations, car il peut y avoir des phénomènes de réabsorption de l'émission.

La figure 5 présente les courbes F=f(T) et leur ajustement par la formule (6) pour la rhodamine et la quinine : cet ajustement est d'excellente qualité puisque les coefficients de corrélation sont proches de 1, respectivement $C_{Rh}=0,9979$ et $C_{Qu}=0,9983$ ; on trouve $(m1)_{Rh}=-0,01040$ et $(m1)_{Qu}=-0,00547$, ainsi que $(m2)_{Rh}=0,3816$ et $(m2)_{Qu}=0,3819$.

Seuls les points expérimentaux à moyenne et faible concentration sont représentés. Les tracés en pointillé sont les ajustements des courbes expérimentales par rapport à la formule théorique n°6.

Les coefficients de corrélation, notés C, sont proches de 1, ce qui confirme l'adéquation de l'ajustement par rapport à la courbe expérimentale. Les paramètres (m1)Rh et (ml)Qu en sont déduits, ainsi que (m2)Rh et (m2)Qu.

Le maximum d'émission de la luminescence pour la rhodamine se trouve à la longueur d'onde $\lambda_{Rh}=568$ nm et pour la quinine à $\lambda_{Qu}=477$ nm (mesures de photoluminescence effectuées préalablement). Les efficacités du détecteur de fluorescence (données fabricant) à ces longueurs d'ondes sont respectivement de $Ed_{Rh} = 37$ % et $Ed_{Qu} = 27$ %. On en déduit le rendement quantique de fluorescence de la quinine grâce à l'équation n°9 :

$$\rho_{Qu} = \rho_{Rh} \frac{(\hbar\omega_f)_{Rh}}{(\hbar\omega_f)_{Qu}} \frac{(m1)_{Qu}}{(m1)_{Rh}} \frac{(m2)_{Qu}}{(m2)_{Rh}} \frac{Ed_{Rh}}{Ed_{Qu}} = 94\% \frac{477}{568} x \frac{0.00547}{0.01040} x \frac{0.3819}{0.3816} x \frac{37}{27} = 57\%$$

L'expérience a été réitérée avec une autre préparation de solution de quinine, à plusieurs semaines d'intervalle et l'on retrouve des résultats similaires : 56 %, 57 % et 58 %. L'écart relatif par rapport à la valeur de la littérature ($\rho$=56 %) est de moins de 2 %.

Exemple 2 : Mesure relative du rendement quantique de fluorescence de nanocristaux CdSe(ZnS).

Les nanocristaux de semi-conducteur II-VI sont des particules inorganiques de 2 à 10 nm de diamètre qui émettent de la lumière sous excitation lumineuse.

Une de leurs applications potentielles est de remplacer les colorants organiques pour la chimie et la biologie.

Il est donc intéressant de les comparer aux colorants organiques du point de vue de leur rendement quantique de fluorescence.

Les nanocristaux qui ont été étudiés proviennent d'une source commerciale. Ce sont des coeurs (coquilles) : CdSe(ZnS) dispersés dans du toluène.

Afin d'obtenir une solution moins visqueuse, ils sont dispersés dans du trichlorométhane. Ces particules émettent à une longueur d'onde $\lambda = 626$ nm.

Il est procédé de la même façon que pour l'exemple 1, en faisant une acquisition tout d'abord sur la rhodamine, qui sert de référence, puis sur la solution de nanocristaux. L'exploitation des résultats se fait aussi de la même façon que dans l'exemple tracé et l'ajustement de R=f(T) donne des coefficients de corrélation proches de 1 pour la rhodamine comme pour les nanocristaux (données non représentées), ce qui valide l'expérience.

Sur la figure 6, seuls les points expérimentaux à moyenne et faible concentration sont représentés. Les tracés en pointillé sont les ajustements des courbes expérimentales par rapport à la formule théorique n°6. Les coefficients de corrélation, notés C, sont proches de 1, respectivement $C_{Rh}=0,9986$ pour la rhodamine et $C_{nX}=0,9985$ pour les nanocristaux, ce qui confirme l'adéquation de l'ajustement par rapport à la courbe expérimentale. Les paramètres (m1)Rh et (m1)nX en sont déduits, ainsi que (m2)Rh et (m2)nX.

La figure 6 présente les courbes F=f(T) et leur ajustement pour la rhodamine et les nanocristaux ; on trouve $(m1)_{Rh}=-0,01079$ et $(m1)_{nX}=-0,00241$, ainsi que $(m2)_{Rh}=0,3859$ et $(m2)_{nX}=0,3430$. Les efficacités du détecteur de fluorescence aux longueurs d'ondes correspondantes sont respectivement de $Ed_{Rh} = 37$ % et $Ed_{nx} = 43$ %. On en déduit le rendement quantique de fluorescence de ces nanocristaux grâce à l'équation n°9 :

$$\rho_{nX} = \rho_{Rh} \frac{(\hbar\omega_f)_{Rh}}{(\hbar\omega_f)_{nX}} \frac{(m1)_{nX}}{(m1)_{Rh}} \frac{(m2)_{nX}}{(m2)_{Rh}} \frac{Ed_{Rh}}{Ed_{nX}} = 94\% \frac{626}{568} x \frac{0.00253}{0.01061} x \frac{0.3424}{0.3807} x \frac{37}{43} = 19\%$$

Une autre mesure sur ces mêmes nanocristaux a donné la même valeur de 19 %, ce qui confirme le résultat précédent.

**Revendications**

1. Procédé de mesure du rendement quantique relatif de fluorescence d'un colorant, comportant :

   a) pour au moins dix concentrations différentes du colorant en solution dans un solvant :

   a1) l'excitation du colorant, à l'aide d'un rayonnement électromagnétique (6),
   a2) la mesure de la photoluminescence (67) du colorant excité par ce rayonnement,
   a3) et la mesure de la partie de ce rayonnement électromagnétique qui est transmise (65) à travers une cellule (20) contenant ce colorant, ou signal transmis,

   b) la comparaison des données mesurées avec des données de photoluminescence et de transmission d'un colorant de référence,
   c) le calcul du rendement quantique relatif de fluorescence du colorant.

2. Procédé selon la revendication 1, la solution du colorant dans le solvant étant diluée de manière croissante dans le temps.

3. Procédé selon la revendication 1 ou 2, le colorant étant d'abord le colorant de référence, puis le colorant dont on cherche à mesurer le rendement quantique relatif.

4. Procédé selon l'une des revendications 1 à 3, les mesures étant effectuées pour un nombre de concentrations supérieures à 15 ou 20 ou 25 ou comprises entre 10 et 100 ou 500.

5. Procédé selon l'une des revendications 1 à 4, comportant en outre l'ajustement à une formule théorique des données de signal de fluorescence (F) et de signal transmis (T).

6. Procédé selon la revendication 5, la formule théorique étant :

$$F = \frac{B}{\sqrt{A}} \frac{\hbar\omega_f}{\hbar\omega_i} \rho \sqrt{T} \sinh\left(\frac{\Delta}{L} \ln\left(\frac{A}{T}\right)\right) \qquad (5)$$

   dans laquelle F est proportionnelle à la puissance du signal de fluorescence, T est proportionnelle à la puissance du signal transmis, $\rho$ est le rendement quantique absolu de fluorescence, $\hbar\omega_f$ est l'énergie des photons émis par la solution, $\hbar\omega_i$ est l'énergie des photons incidents, B et A sont des constantes et $\Delta$ et L des paramètres géométriques de la cellule qui contient le colorant, L étant la longueur du trajet du faisceau incident lorsqu'il traverse toute la cellule contenant le colorant, $2\Delta$ étant la largeur d'une fenêtre de cette cellule par laquelle sort le signal de fluorescence.

7. Procédé selon la revendication 5, la formule théorique étant :

$$F = -\frac{B}{A}\frac{\hbar\omega_f}{\hbar\omega_i}\rho\frac{\Delta}{L}(T-A) + C(T-A)^3 \qquad (6)$$

dans laquelle F est proportionnelle à la puissance du signal de fluorescence, T est proportionnelle à la puissance du signal transmis, $\rho$ est le rendement quantique absolu de fluorescence, $\hbar\omega_f$ est l'énergie des photons émis par la solution, $\hbar\omega_i$ est l'énergie des photons incidents, B, A et C sont des constantes et $\Delta$ et L des paramètres géométriques de la cellule qui contient le colorant, <u>L étant la longueur du trajet du faisceau incident lorsqu'il traverse toute la cellule contenant le colorant, 2$\Delta$ étant la largeur d'une fenêtre de cette cellule par laquelle sort le signal de fluorescence.</u>

**8.** Procédé selon l'une des revendications 1 à 7, le rendement quantique relatif du colorant étant obtenu par la formule :

$$\rho_E = \rho_R \frac{(\hbar\omega_f)_R}{(\hbar\omega_f)_E} \frac{(m1)_E}{(m1)_R} \frac{(m2)_E}{(m2)_R} \qquad (9)$$

dans laquelle $\hbar\omega_f$ est l'énergie des photons émis par la solution, $\hbar\omega_i$ est l'énergie des photons incidents, m1 et m2 sont des paramètres caractéristiques de l'évolution de la fluorescence (F) en fonction du signal transmis (T), les indices R et E étant relatifs respectivement au colorant de référence et à l'échantillon.

**9.** Procédé selon l'une des revendications 1 à 7, comportant en outre une mesure des variations de l'intensité ou de la puissance du rayonnement incident sur la cellule et de normalisation des données de signal de fluorescence et de signal transmis par rapport auxdites variations.

**10.** Procédé selon l'une des revendications 1 à 9, comportant en outre une homogénéisation du colorant dans la cellule.

**11.** Procédé selon l'une des revendications 1 à 10, comportant en outre une mesure du signal (63) réfléchi par la cellule qui contient le colorant.

**12.** Procédé selon la revendication 10 ou 11, comportant en outre une étape de contrôle de l'homogénéité du colorant.

**13.** Procédé selon l'une des revendications 1 à 12, le colorant étant organique.

**14.** Procédé selon l'une des revendications 1 à 13, le colorant étant inorganique.

**15.** Procédé selon la revendication 14, le colorant contenant des nanocristaux de semi-conducteur.

**16.** Procédé selon la revendication 15, le semi-conducteur étant de type II - VI.

**17.** Procédé selon la revendication 15, le semi-conducteur étant du CdSe(ZnS).

**18.** Procédé selon l'une des revendications 1 à 17, les moyens de détection (223, 224) de la fluorescence et du rayonnement transmis, ainsi que la cellule (20) et au moins une partie des moyens (13, 14, 15, 16) permettant de définir le trajet du rayonnement incident (62) étant fixes entre eux.

**19.** Procédé selon l'une des revendications 1 à 18, la mesure de la photoluminescence (67) du colorant excité par le rayonnement et du signal transmis (65) à travers la cellule contenant ce colorant, ainsi qu'éventuellement celle du rayonnement réfléchi et/ou du rayonnement incident, étant simultanées.

**20.** Dispositif pour la mesure du rendement quantique relatif de fluorescence d'un colorant en solution dans un solvant, ce dispositif comportant :

- une cellule (20) de fluorescence,
- deux détecteurs (223, 224) de mesure d'un signal de fluorescence émis par le colorant excité par un rayonnement électromagnétique et de mesure de la partie de ce rayonnement électromagnétique qui est transmise (65) à travers la cellule contenant ce colorant, ou signal transmis à travers le colorant,
- des moyens (8, 80) de calcul du rendement quantique relatif en fonction :

  • des données de signaux de fluorescence émis par un colorant excité et d'un signal laser transmis à travers ce colorant,
  • et de données relatives à un colorant de référence.

**21.** Dispositif selon la revendication 20, comportant en outre des moyens pour faire varier la concentration d'un colorant dans la cellule en fonction du temps.

**22.** Dispositif selon l'une des revendications 20 ou 21, comportant en outre des moyens (222) pour mesurer un signal réfléchi par la cellule (20).

**23.** Dispositif selon l'une des revendications 20 à 22, comportant en outre des moyens (206) pour homogénéiser le colorant dans la cellule.

**24.** Dispositif selon l'une des revendications 20 à 23, comportant en outre des moyens (221) pour mesurer des variations de l'intensité ou de la puissance d'un rayonnement incident sur la cellule (20).

**25.** Dispositif selon l'une des revendications 20 à 24, les moyens de calcul effectuant l'ajustement à une formule théorique des données de signal de fluorescence (F) et de signal transmis (T).

**26.** Dispositif selon la revendication 25, la formule théorique étant :

$$F = \frac{B}{\sqrt{A}} \frac{\hbar\omega_f}{\hbar\omega_i} \rho \sqrt{T} \sinh\left(\frac{\Delta}{L}\ln\left(\frac{A}{T}\right)\right) \qquad (5)$$

dans laquelle F est proportionnelle à la puissance du signal de fluorescence, T est proportionnelle à la puissance du signal transmis, ρ est le rendement quantique absolu de fluorescence, $\hbar\omega_f$ est l'énergie des photons émis par la solution, $\hbar\omega_i$ est l'énergie des photons incidents, B et A sont des constantes et Δ et L des paramètres géométriques de la cellule qui contient le colorant, L étant la longueur du trajet du faisceau incident lorsqu'il traverse toute la cellule de fluorescence, 2Δ étant la largeur d'une fenêtre de la cellule de fluorescence par laquelle sort le signal de fluorescence.

**27.** Dispositif selon la revendication 25, la formule théorique étant :

$$F = -\frac{B}{A}\frac{\hbar\omega_f}{\hbar\omega_i}\rho\frac{\Delta}{L}(T - A) + C(T - A)^3 \qquad (6)$$

dans laquelle F est proportionnelle à la puissance du signal de fluorescence, T est proportionnelle à la puissance du signal transmis, ρ est le rendement quantique absolu de fluorescence, $\hbar\omega_f$ est l'énergie des photons émis par la solution, $\hbar\omega_i$ est l'énergie des photons incidents, B, A et C sont des constantes et Δ et L des paramètres géométriques de la cellule qui contient le colorant, L étant la longueur du trajet du faisceau incident lorsqu'il traverse toute la cellule de fluorescence, 2Δ étant la largeur d'une fenêtre de la cellule de fluorescence par laquelle sort le signal de fluorescence.

**28.** Dispositif selon l'une des revendications 20 à 27, les moyens (8) de calcul calculant le rendement quantique relatif du colorant par la formule :

$$\rho_E = \rho_R \frac{\left(\hbar\omega_f\right)_R (m1)_E (m2)_E}{\left(\hbar\omega_f\right)_E (m1)_R (m2)_R} \qquad (9)$$

dans laquelle $\hbar\omega_f$ est l'énergie des photons émis par la solution, $\hbar\omega_i$ est l'énergie des photons incidents, m1 et m2 sont des paramètres caractéristiques de l'évolution de la fluorescence (F) en fonction du signal transmis (T), les indices R et E étant relatifs respectivement au colorant de référence et à l'échantillon.

29. Dispositif selon l'une des revendications 20 à 28, la cellule (20) et les moyens (223, 224) de mesure étant disposés de manière fixe les uns par rapport aux autres.

30. Dispositif selon l'une des revendications 20 à 29, comportant en outre des moyens (13, 14, 15, 16) pour définir une direction d'incidence d'un rayonnement (60).

31. Dispositif selon l'une des revendications 20 à 30, comportant en outre des moyens d'injection automatique d'un colorant et d'un solvant dans la cellule.

**Claims**

1. Method for measuring the relative fluorescence quantum yield of a dye, comprising:

    a) for at least ten different concentrations of the dye in solution in a solvent:

        a1)-exciting the dye, using electromagnetic radiation (6),
        a2)-measuring the photoluminescence (67) of the dye excited by this radiation
        a3)-and measuring the part of this electromagnetic radiation which is transmitted (65) through a cell (20) containing this dye, or transmitted signal,

    b) comparing the measured data with standard dye data of photoluminescence and transmission,
    c) calculating the relative fluorescence quantum yield of the dye.

2. Method according to claim 1, the solution of the dye in the solvent being diluted increasingly over time.

3. Method according to claim 1 or 2, the dye being firstly the standard dye, then the dye for which it is sought to measure the quantum yield.

4. Method according to any of claims 1 to 3, the measurements being made for a number of concentrations greater than 15 or 20 or 25, or lying between 10 and 100 or 500.

5. Method according to any of claims 1 to 4 also comprising adjustment, to a theoretical formula, of fluorescence signal (F) data and transmitted signal (T) data.

6. Method according to claim 5, the theoretical formula being:

$$F = \frac{B}{\sqrt{A}} \frac{\hbar\omega_f}{\hbar\omega_i} \rho\sqrt{T}\sinh\left(\frac{\Delta}{L}\ln\left(\frac{A}{T}\right)\right) \qquad (5)$$

in which F is proportional to the power of the fluorescence signal, T is proportional to the power of the transmitted signal, $\rho$ is the absolute fluorescence quantum yield, $\hbar\omega_f$ is the energy of the photons emitted by the solution, $\hbar\omega_i$ is the energy of the incident photons, B and A are constants and $\Delta$ and L are geometric parameters of the cell containing the dye, L being the length of the incident beam pathway when it passes through the entire cell, $2\Delta$ being the width of a window of this cell forming an outlet for fluorescence radiation.

7. Method according to claim 5, the theoretical formula being:

$$F = -\frac{B}{A}\frac{\hbar\omega_f}{\hbar\omega_i}\rho\frac{\Delta}{L}(T-A)+C(T-A)^3 \qquad (6)$$

in which F is proportional to the power of the fluorescence signal, T is proportional to the power of the transmitted signal, $\rho$ is the absolute fluorescence quantum yield, $\hbar\omega_f$ is the energy of the photons emitted by the solution, $\hbar\omega_i$ is the energy of the incident photons, B, A and C are constants and $\Delta$ and L are geometric parameters of the cell containing the dye, L being the length of the incident beam pathway when it passes through the entire cell, $2\Delta$ being the width of a window of this cell forming an outlet for fluorescence radiation.

8. Method according to any of claims 1 to 7, the relative quantum yield of the dye being obtained using the formula:

$$\rho_E = \rho_R \frac{(\hbar\omega_f)_R}{(\hbar\omega_f)_E}\frac{(m1)_E}{(m1)_R}\frac{(m2)_E}{(m2)_R} \qquad (9)$$

in which $\hbar\omega_f$ is the energy of the photons emitted by the solution, $\hbar\omega_i$ is the energy of the incident photons, m1 and m2 are parameters characteristic of changes in fluorescence (F) in relation to the transmitted signal (T), indices R and E relating respectively to the standard dye and to the sample.

9. Method according to any of claims 1 to 7, also comprising measurement of the variations in intensity or power of the incident radiation on the cell, and normalization of fluorescence signal and transmitted signal data with respect to said variations.

10. Method according to any of claims 1 to 9, also comprising homogenization of the dye in the cell.

11. Method according to any of claims 1 to 10, also comprising measurement of the signal (63) reflected by the cell containing the dye.

12. Method according to claim 10 or 11, also comprising a step to control the homogeneity of the dye.

13. Method according to any of claims 1 to 12, the dye being organic.

14. Method according to any of claims 1 to 13, the dye being inorganic.

15. Method according to claim 14, the dye containing semiconductor nanocrystals.

16. Method according to claim 15, the semiconductor being of II - VI type.

17. Method according to claim 15, the semiconductor being CdSe(ZnS).

18. Method according to any of claims 1 to 17, the detection means (223, 224) to detect fluorescence and transmitted radiation, and the cell (20) and at least part of the means (13, 14, 15, 16) enabling the defining of the pathway of incident radiation (62), being fixed with respect to each other.

19. Method according to any of claims 1 to 18, the measurement of the photoluminescence (67) of the dye excited by the radiation and of the signal (65) transmitted through the cell containing the dye, and optionally measurement of the reflected radiation and/or incident radiation, being simultaneous.

20. Device for measuring the relative fluorescence quantum yield of a dye in solution in a solvent, this device comprising:

 - a fluorescence cell (20,

- two detectors (223, 224) to measure a fluorescence signal emitted by the dye excited by electromagnetic radiation and to measure part of said electromagnetic radiation which is transmitted through the cell containing this dye, or signal transmitted through the dye,
- means (8, 80) to calculate relative quantum yield in relation to:

  • data of fluorescence signals emitted by an excited dye and of a laser signal transmitted through this dye,
  • and data relating to a standard dye.

**21.** Device according to claim 20, also comprising means to cause the concentration of a dye to vary in the cell in relation to time.

**22.** Device according to either of claims 20 or 21, also comprising means (222) to measure a signal reflected by the cell (20).

**23.** Device according to any of claims 20 to 22, also comprising means (206) to homogenize the dye in the cell.

**24.** Device according to any of claims 20 to 23, also comprising means (221) to measure variations in the intensity or power of incident radiation on the cell (20).

**25.** Device according to any of claims 20 to 24, the calculation means adjusting the fluorescence signal (F) data and transmitted signal (T) data to a theoretical formula.

**26.** Device according to claim 25, the theoretical formula being:

$$\mathbf{F} = \frac{\mathbf{B}}{\sqrt{\mathbf{A}}} \frac{\hbar\omega_f}{\hbar\omega_i} \rho \sqrt{\mathbf{T}} \sinh\left(\frac{\Delta}{\mathbf{L}} \ln\left(\frac{\mathbf{A}}{\mathbf{T}}\right)\right) \tag{5}$$

in which F is proportional to the power of the fluorescence signal, T is proportional to the power of the transmitted signal, $\rho$ is the absolute fluorescence quantum yield, $\hbar\omega_f$ is the energy of the photons emitted by the solution, $\hbar\omega_i$ is the energy of the incident photons, B and A are constants and $\Delta$ and L are geometric parameters of the cell containing the dye, L being the length of the incident beam pathway when it passes through the entire cell, $2\Delta$ being the width of a window of this cell forming an outlet for fluorescence radiation.

**27.** Device according to claim 25, the theoretical formula being:

$$\mathbf{F} = -\frac{\mathbf{B}}{\mathbf{A}} \frac{\hbar\omega_f}{\hbar\omega_i} \rho \frac{\Delta}{\mathbf{L}} (\mathbf{T} - \mathbf{A}) + \mathbf{C}(\mathbf{T} - \mathbf{A})^3 \tag{6}$$

in which F is proportional to the power of the fluorescence signal, T is proportional to the power of the transmitted signal, $\rho$ is the absolute fluorescence quantum yield, $\hbar\omega_f$ is the energy of the photons emitted by the solution, $\hbar\omega_i$ is the energy of the incident photons, B, A and C are constants and $\Delta$ and L are geometric parameters of the cell containing the dye, L being the length of the incident beam pathway when it passes through the entire cell, $2\Delta$ being the width of a window of this cell forming an outlet for fluorescence radiation.

**28.** Device according to any of claims 20 to 27, the calculation means (8) calculating the relative quantum yield of the dye using the formula:

$$\rho_E = \rho_R \frac{(\hbar\omega_f)_R (m1)_E (m2)_E}{(\hbar\omega_f)_E (m1)_R (m2)_R} \tag{9}$$

in which $\hbar\omega_f$ is the energy of the photons emitted by the solution, $\hbar\omega_i$ is the energy of the incident photons, m1 and m2 are parameters characteristic of changes in fluorescence (F) in relation to the transmitted signal (T), indices R and E respectively relating to the standard dye and to the sample.

29. Device according to any of claims 20 to 28, the cell (20) and the measurement means (223, 224) being arranged fixedly with respect to one another.

30. Device according to any of claims 20 to 29, also comprising means (13, 14, 15, 16) to define a direction of incidence of radiation (60).

31. Device according to any of claims 20 to 30, also comprising automated injection means to inject a dye and solvent into the cell.

**Patentansprüche**

1. Verfahren zur relativen Messung der Fluoreszenzquantumseffizienz eines Farbstoffs, umfassend:

    a) für wenigstens zehn verschiedene Konzentrationen des in einem Lösungsmittel gelösten Farbstoffs:

    a1) das Erregen des Farbstoffs mit Hilfe einer elektromagnetischen Strahlung (6),
    a2) das Messen der Photolumineszenz (67) des durch die Strahlung erregten Farbstoffs,
    a3) und das Messen des durch eine diesen Farbstoff enthaltende Zelle (20) hindurch transmittierten Teils dieser elektromagnetischen Strahlung (65), oder transmittierten Signals,

    b) das Vergleichen der gemessenen Daten mit Photolumineszenz- und Transmissionsdaten eines Referenzfarbstoffs,
    c) das Berechnen der relativen Fluoreszenzquantumseffizienz des Farbstoffs.

2. Verfahren nach Anspruch 1, wobei die Lösung des Farbstoffs in dem Lösungsmittel zeitabhängig zunehmend verdünnt wird.

3. Verfahren nach Anspruch 1 oder 2, wobei der Farbstoff zuerst der Referenzfarbstoff ist und dann der Farbstoff, dessen relative Quantumseffizienz man messen will.

4. Verfahren nach einem der Ansprüche 1 bis 3, wobei die Messungen bei einer Anzahl von Konzentrationen durchgeführt werden, die über 15 oder 20 oder 25 liegt oder zwischen 10 und 100 und 500 enthalten ist.

5. Verfahren nach einem der Ansprüche 1 bis 4, mit außerdem der Anpassung der Daten des Fluoreszenzsignals (F) und des Transmissionssignals (T) an eine theoretische Formel.

6. Verfahren nach Anspruch 5, wobei die theoretische Formel folgende ist:

$$F = \frac{B\hbar\omega_f}{\sqrt{A}\,\hbar\omega_i}\,\rho\,\sqrt{T}\,\sinh\left(\frac{\Delta}{L}\ln\left(\frac{A}{T}\right)\right) \tag{5}$$

in der F proportional ist zu der Leistung des Fluoreszenzsignals, T proportional ist zu der Leistung des transmittierten Signals, $\rho$ die absolute Fluoreszenzquantumseffizienz ist, $\hbar\omega_r$ die Energie der durch die Lösung abgestrahlten Photonen ist, $\hbar\omega_i$ die Energie der einfallenden Photonen ist, B und A Konstanten sind und $\Delta$ und L geometrische Parameter der Zelle sind, die den Farbstoff enthält, L die Länge des Wegs des einfallenden Strahls ist, wenn er die gesamte den Farbstoff enthaltende Zelle durchquert, $2\Delta$ die Breite eines Fensters dieser Zelle ist, durch das das Fluoreszenzsignal austritt.

7. Verfahren nach Anspruch 5, wobei die theoretische Formel folgende ist:

$$F = \frac{B\hbar\omega_f}{A\hbar\omega_i} \rho \frac{\Delta}{L}(T - A) + C(T - A)^3 \qquad\qquad (6)$$

in der F proportional ist zu der Leistung des Fluoreszenzsignals, T proportional ist zu der Leistung des transmittierten Signals, $\rho$ die absolute Fluoreszenzquantumseffizienz ist, $\hbar\omega_f$ die Energie der durch die Lösung abgestrahlten Photonen ist, $\hbar\omega_i$ die Energie der einfallenden Photonen ist, B, A und C Konstanten sind und $\Delta$ und L geometrische Parameter der Zelle sind, die den Farbstoff enthält, L die Länge des Wegs des einfallenden Strahls ist, wenn er die gesamte den Farbstoff enthaltende Zelle durchquert, $2\Delta$ die Breite eines Fensters dieser Zelle ist, durch das das Fluoreszenzsignal austritt.

**8.** Verfahren nach einem der Ansprüche 1 bis 7, wobei man die relative Quantumseffizienz des Farbstoffs durch folgende Formel erhält:

$$\rho_E = \rho_R \frac{(\hbar\omega_f)_R}{(\hbar\omega_f)_E} \frac{(m1)_E}{(m1)_R} \frac{(m2)_E}{(m2)_R} \qquad\qquad (9)$$

in der $\hbar\omega_f$ die Energie der durch die Lösung abgestrahlten Photonen ist, $\hbar\omega_i$ die Energie der einfallenden Photonen ist, m1 und m2 Parameter sind, die charakteristisch sind für die Entwicklung der Fluoreszenz (F) in Abhängigkeit von dem transmittierten Signal (T), die Indices R und E sich jeweils auf den Referenzfarbstoff und auf die Probe beziehen.

**9.** Verfahren nach einem der Ansprüche 1 bis 7, mit außerdem einer Messung der Veränderungen der Intensität oder der Leistung der in die Zelle einfallenden Strahlung und der Normalisierung der Daten des Fluoreszenzsignals und des transmittierten Signals in Bezug auf die genannten Veränderungen.

**10.** Verfahren nach einem der Ansprüche 1 bis 9, mit außerdem einer Homogenisierung des Farbstoffs in der Zelle.

**11.** Verfahren nach einem der Ansprüche 1 bis 10, mit außerdem einer Messung des durch die den Farbstoff enthaltende Zelle reflektierten Signals (63).

**12.** Verfahren nach Anspruch 10 oder 11, mit außerdem einem Schritt zur Kontrolle der Homogenität des Farbstoffs.

**13.** Verfahren nach einem der Ansprüche 1 bis 12, wobei der Farbstoff organisch ist.

**14.** Verfahren nach einem der Ansprüche 1 bis 13, wobei der Farbstoff anorganisch ist.

**15.** Verfahren nach Anspruch 14, wobei der Farbstoff Halbleiter-Nanokristalle enthält.

**16.** Verfahren nach Anspruch 15, wobei der Halbleiter vom II-VI-Typ ist.

**17.** Verfahren nach Anspruch 15, wobei der Halbleiter CdSe (ZnS) ist.

**18.** Verfahren nach einem der Ansprüche 1 bis 17, wobei die Detektionseinrichtungen (223, 224) der Fluoreszenz und der transmittierten Strahlung sowie die Zelle (20) und wenigstens ein Teil der das Definieren des Wegs der einfallenden Strahlung ermöglichenden Einrichtungen (13, 14, 15, 16) ortsfest zueinander angeordnet sind.

**19.** Verfahren nach einem der Ansprüche 1 bis 18, mit simultaner Messung der Photolumineszenz (67) des durch die Strahlung erregten Farbstoffs und des durch die diesen Farbstoff enthaltende Zelle hindurch transmittierten Signals, sowie eventuell derjenigen der reflektierten Strahlung und/oder der einfallenden Strahlung.

**20.** Vorrichtung zur relativen Messung der Fluoreszenzquantumseffizienz eines in einer Lösung aufgelösten Farbstoffs, wobei diese Vorrichtung umfasst:

- eine Fluoreszenzzelle (20),
- zwei Detektoren (223, 224) zum Messen eines Fluoreszenzsignals, abgestrahlt durch den durch eine elektromagnetische Strahlung erregten Farbstoff, und des durch eine diesen Farbstoff enthaltende Zelle (20) hindurch transmittierten Teils dieser elektromagnetischen Strahlung (65), oder durch den Farbstoff hindurch transmittierten Signals,
- Einrichtungen (8, 80) zur Berechnung der relativen Quantumseffizienz in Abhängigkeit von:

     • Daten des durch einen erregten Farbstoff abgestrahlten Fluoreszenzsignals und eines durch diesen Farbstoff hindurch transmittierten Lasersignals, und
     • auf einen Referenzfarbstoff bezogenen Daten.

**21.** Vorrichtung nach Anspruch 20, mit außerdem Einrichtungen zum Variieren der Konzentration eines Farbstoffs in der Zelle in Abhängigkeit von der Zeit.

**22.** Vorrichtung nach einem der Ansprüche 20 oder 21, mit außerdem Einrichtungen (222) zum Messen eines durch die Zelle (20) reflektierten Signals.

**23.** Vorrichtung nach einem der Ansprüche 20 bis 22, mit außerdem Einrichtungen (206) zum Homogenisieren des Farbstoffs in der Zelle.

**24.** Vorrichtung nach einem der Ansprüche 20 bis 23, mit außerdem Einrichtungen (221) zum Messen der Veränderungen der Intensität oder der Leistung einer in die Zelle (20) einfallenden Strahlung.

**25.** Vorrichtung nach einem der Ansprüche 20 bis 24, wobei die Berechungseinrichtungen die Anpassung der Daten des Fluoreszenzsignals (F) und des Transmissionssignals (T) an eine theoretische Formel durchführen.

**26.** Vorrichtung nach Anspruch 25, wobei die theoretische Formel folgende ist:

$$F = \frac{B\hbar\omega_f}{\sqrt{A}\hbar\omega_i}\rho\sqrt{T}\sinh\left(\frac{\Delta}{L}\ln\left(\frac{A}{T}\right)\right) \tag{5}$$

in der F proportional ist zu der Leistung des Fluoreszenzsignals, T proportional ist zu der Leistung des transmittierten Signals, p die absolute Fluoreszenzquantumseffizienz ist, $\hbar\omega_f$ die Energie der durch die Lösung abgestrahlten Photonen ist, $\hbar\omega_i$ die Energie der einfallenden Photonen ist, B und A Konstanten sind und $\Delta$ und L geometrische Parameter der Zelle sind, die den Farbstoff enthält, L die Länge des Wegs des einfallenden Strahls ist, wenn er die gesamte den Farbstoff enthaltende Zelle durchquert, $2\Delta$ die Breite eines Fensters dieser Zelle ist, durch das das Fluoreszenzsignal austritt.

**27.** Vorrichtung nach Anspruch 25, wobei die theoretische Formel folgende ist:

$$F = \frac{B\hbar\omega_f}{A\hbar\omega_i}\rho\frac{\Delta}{L}(T-A) + C(T-A)^3 \tag{6}$$

in der F proportional ist zu der Leistung des Fluoreszenzsignals, T proportional ist zu der Leistung des transmittierten Signals, p die absolute Fluoreszenzquantumseffizienz ist, $\hbar\omega_f$ die Energie und C Konstanten sind und $\Delta$ und L geometrische Parameter der Zelle sind, die den Farbstoff enthält, L die Länge des Wegs des einfallenden Strahls ist, wenn er die gesamte den Farbstoff enthaltende Zelle durchquert, $2\Delta$ die Breite eines Fensters dieser Zelle ist, durch das das Fluoreszenzsignal austritt.

**28.** Vorrichtung nach einem der Ansprüche 20 bis 27, wobei die Berechnungseinrichtungen (8) die relative Quantumseffizienz des Farbstoff durch folgende Formel berechnen:

$$\rho_E = \rho_R \frac{(\hbar\omega_f)_R \, (m1)_E \, (m2)_E}{(\hbar\omega_f)_E \, (m1)_R \, (m2)_R} \tag{9}$$

in der $\hbar\omega_f$ die Energie der durch die Lösung abgestrahlten Photonen ist, $\hbar\omega_i$ die Energie der einfallenden Photonen ist, m1 und m2 Parameter sind, die charakteristisch sind für die Entwicklung der Fluoreszenz (F) in Abhängigkeit von dem transmittierten Signal (T), die Indices R und E sich jeweils auf den Referenzfarbstoff und auf die Probe beziehen.

29. Vorrichtung nach einem der Ansprüche 20 bis 28, wobei die Zelle (20) und die Messeinrichtungen (223, 224) ortsfest zueinander angeordnet sind.

30. Vorrichtung nach einem der Ansprüche 20 bis 29, mit außerdem Einrichtungen (13, 14, 15, 16), um eine Einfallrichtung einer Strahlung (60) zu definieren.

31. Vorrichtung nach einem der Ansprüche 20 bis 30, mit außerdem Einrichtungen zum automatischen Injizieren eines Farbstoffs und eines Lösungsmittels in die Zelle.

# FIG. 1

Système d'injection du fluide

4 — Injecteur automatique

40

2

20

Source d'excitation :
Laser argon à λ = 365 nm

6

60

62

Cellule de fluorescence

67    65    63

61

Détecteur

22

80

Carte d'acquisition

8

Interface informatique

# FIG. 2

65    20    62    14

Faiseau laser

16    67    63    5    15    222

10    223    61    224

13    12    221

FIG. 3A

FIG. 3B

Graphe de R= f (T) pour le sulfate de quinine

Ajustement parabolique :
$$R = r + r' T^2$$

R : réflexion

C= 0.9995

0    0,05    0,1    0,15    0,2    0,25    0,3    0,35    0,4

T : transmission

# FIG. 4

Graphe de F= f (T) pour la rhodamine et le sulfate de quinine

Rh

F : fluorescence

Qu

Ajustement par rapport à:
$$F = m1(T-m2)+m3(T-m2)^3$$

$(m1)_{Rh}$ = -0,01040
$(m2)_{Rh}$ = 0,3816
C = 0,9979

$(m1)_{Qu}$ = -0,00547
$(m2)_{Qu}$ = 0,3819
C = 0,9983

# FIG. 5

0,1    0,15    0,2    0,25    0,3    0,35    0,4

T : transmission

Graphe de F= f (T) pour la rhodamine et
les nanocristaux CdSe(ZnS)

Rh

Ajustement par rapport à:
$F = m1(T-m2)+m3(T-m2)^3$

$(m1)_{Rh} = -0,01079$

$(m2)_{Rh} = 0,3859$

$C = 0,9986$

FIG. 6

$(m1)_{nX} = -0,00241$

$(m2)_{nX} = 0,3430$

$C = 0,9985$

nX

F : fluorescence

0,1   0,15   0,2   0,25   0,3   0,35   0,4

T : transmission

FIG. 7

84

82

86

88

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5928954 A

**Littérature non-brevet citée dans la description**

- **J. N. Demas et al.** *J. Phys. Chem.,* 1971, vol. 75, 991-1023
- **J. N. Demas et al.** *J. Phys. Chem.,* 1971, vol. 75, 991-1007
- **A. V. Butenin et al.** *Opt. Spectrosc.,* Novembre 1979, vol. 47 (5), 568-569
- **B. Gelernt et al.** *J. Chem. Soc., Faraday Trans.,* 1974, vol. 2 (70), 939-940